Europäisches Patentamt

European Patent Office

Office européen des brevets

(11) Veröffentlichungsnummer: **0 235 670**
**B1**

(12) **EUROPÄISCHE PATENTSCHRIFT**

(45) Veröffentlichungstag der Patentschrift: **05.12.90**

(21) Anmeldenummer: **87102260.4**

(22) Anmeldetag: **17.02.87**

(51) Int. Cl.⁵: **B 27 B 17/08, F 16 D 59/00**

(54) Tragbare Motorkettensäge mit einer Reibungsbremse zum Abbremsen der Sägekette.

(30) Priorität: **06.03.86 DE 3607376**

(43) Veröffentlichungstag der Anmeldung:
**09.09.87 Patentblatt 87/37**

(45) Bekanntmachung des Hinweises auf die
Patenterteilung:
**05.12.90 Patentblatt 90/49**

(84) Benannte Vertragsstaaten:
**CH DE FR GB IT LI SE**

(56) Entgegenhaltungen:
**EP-A-0 072 610**
**DE-A-3 040 516**
**FR-A-2 569 367**
**US-A-3 361 165**
**US-A-3 793 727**

(73) Patentinhaber: **Metabowerke GmbH & Co.**
**Gerberstrasse 31**
**D-7440 Nürtingen (DE)**

㊒ Der Erfinder haben auf ihre Nennung verzichtet

(74) Vertreter: **Dreiss, Hosenthien & Fuhlendorf**
**Gerokstrasse 6**
**D-7000 Stuttgart 1 (DE)**

Courier Press, Leamington Spa, England.

## Beschreibung

Die Erfindung betrifft eine tragbare Motorkettensäge mit einer Reibungsbremse zum Abbremsen der Sägekette, die mit einem beim Auftreten eines bedrohlichen Zustandes ansprechenden Schalter versehen ist, durch dessen Betätigung eine Reibungsbremse wirksam wird, wobei zwischen dem Antriebsmotor und der Sägekette eine Schlingfederkupplung vorgesehen ist, die zugleich auch als Reibungsbremse für die Sägekette dient, und bei der die Schlingfeder der Schlingfederkupplung mit einem Teil ihrer Windungen eine vom Antriebsmotor angetriebene Antriebstrommel und mit dem restlichen Teil ihrer Windungen eine mit dem Kettenantrieb verbundene Abtriebstrommel umschließt, wobei die Schlingfeder mit ihrer eigenen Vorspannung an den Trommeln anliegt und die Windungen der Schlingfeder im Drehsinn der Antriebstrommel gleichsinnig gewunden sind und das antriebstrommelseitige Ende der Schlingfeder mit einem Stoppanschlag zusammenwirkt, der in die Umlaufbahn des außen abgewinkelten Endes dieser Schlingfeder einschiebbar ist, und wobei der Stoppanschlag von einem Ende eines an dem Gehäuse der Motorkettensäge mittig gelagerten Kupplungsbolzens gebildet ist und wobei an dem anderen Ende des Kupplungsbolzens ein Federteller angeordnet ist, an dem eine am Gehäuse abgestützte Feder angreift und den Kupplungsbolzen in Richtung auf seine Stopplage drängt.

Bei einer aus US—A—3 361 165 bekannten solchen Motorkettensäge wird die Kettenbremse über einen besonderen am Handgriff angeordneten Griffhebel ausgelöst, der aber über einen Arretierknopf arretiert werden kann, so daß dann der Todtmanndschalter unwirksam ist und damit bei einer plötzlich auftretenden Gefahr nicht wirken kann. Zudem ist bei dieser bekannten Kettensäge nur das Loslassen am Bügelhebel abgesichert, nicht dagegen das Loslassen am Handgriff, so daß insgesamt eine ungenügende Unfallabsicherung gegeben ist.

Zur Vermeidung der geschilderten Nachteile liegt der vorliegenden Erfindung die Aufgabe zugrunde eine tragbare Motorkettensäge der eingangs genannten Art so auszubilden, daß bei einer Gefahrensituation ein sicheres rasches Abbremsen der Sägekette gewährleistet ist.

Zur Lösung dieser Aufgabe sieht die Erfindung vor, daß der Federteller fest mit dem Kupplungsbolzen verbunden ist, und daß ein zweiarmiger Hebel vorgesehen ist, der etwa in seiner Mitte eine Lagerausnehmung besitzt, die den Federteller aufnimmt, und daß der eine Arm des zweiarmigen Hebels von einem daran angreifenden, handbetätigten Sperrhebel in dessen entriegelter Stellung in eine Richtung entgegengesetzt der Kraftrichtung der Feder und im wesentlichen parallel zur axialen Richtung des Kupplungsbolzens verschoben ist, und daß der andere Arm des zweiarmigen Hebels von einem daran angreifenden Bahnstück eines als Fühler dienenden Schwenkhebels in dessen nichtausgelöster Stellung in eine Richtung entgegengesetzt der Kraftrichtung der Feder und im wesentlichen achsparallel zum Kupplungsbolzen verschoben ist.

Durch die vorgeschlagene Anordnung eines zweiarmigen Hebels, auf dessen freie Arme jeweils eine Art Todtmannschalter wirkt, ist eine sichere und rasche Abbremsung bei geringem Konstruktionsaufwand möglich. Die Sägekette wird bereits nach wenigen Umdrehungen des Antriebsrads stillgesetzt.

Besonders vorteilhaft können zur Herabsetzung der Reibung die Enden der Arme zusätzlich Rollen tragen.

Platz- und konstruktionsgewichtsparend kann der zweiarmige Hebel etwa in seiner Mitte eine napfförmige Ausnehmung für die Feder und einen Federteller des Kupplungsbolzens aufweisen, wobei die Ausnehmung mittig vom Kupplungsbolzen durchdrungen ist.

Bei einer Motorkettensäge mit um ein Schwenklager schwenkbaren Schwenkbügel, dessen freier Endbereich als Hanschutz ausgebildet ist kann zur Platz- und Teileeinsparung der Schwenkbügel zwischen seinem Schwenklager und dem Handschutz ein Rastauge für das Ende des anderen Arms des zweiarmigen Hebels aufweisen, wobei durch Wegschwenken des Schwenkbügels beim Auftreten eines bedrohlichen Zustandes dann das Ende des Arms freigegeben durch die Wirkung der Feder abgesenkt und so der Kupplungsbolzen in seine Stoppstellung gelangt.

Zur Erhöhung der Betriebssicherheit gegen versehentliche Fehlbedienung kann die Einschaltsperre durch den Stoppanschlag in ihrer Sperrstellung gehalten sein und durch Betätigung einer Sperraufhebung kann der Stoppanschlag gelöst und ein Schalterdrücker zum Einschalten des Antriebmotors freigegeben werden, insbesondere eines Elektromotors. Durch die gleiche Maßnahme kann aber auch ein Verbrennungsmotor anlaßbereit gemacht werden.

Konstruktiv besonders einfach kann die Einschaltsperre ein dreiarmiger Hebel sein, wobei die Arme etwa senkrecht zueinander angeordnet sind, wobei ein erster Hebelarm die von Hand betätigbare Sperraufhebung abgibt, das Ende des zweiten Hebelarms mit dem Arm des den Kupplungsbolzen betätigenden Hebels zusammenwirkt und das Ende des dritten Hebelarms in der Einschaltsperrstellung als Sperranschlag für den Schalterdrücker dient.

Platzsparend und leicht bedienbar kann der dreiarmige Hebel an der Handgriffoberseite angeordnet sein, wobei dann der erste Hebelarm in einem Druchbruch etwas aus der Griffoberseite zur Betätigung herausragt und die Stirnseite des dritten etwa senkrecht zum zweiten Hebelarm angeordneten Hebelarms den Sperranschlag für eine Kante des Schaltdrückers abgibt und der zweite Hebelarm in einem Lagerauge die Rolle des den Kupplungsbolzen betätigenden Hebels entgegen der Richtung ihrer Sperrbewegung abstützt.

Weitere erfindungsgemäße Ausbildungen sind den Unteransprüchen zu entnehmen und werden mit ihren Vorteilen in der nachstehenden Beschreibung näher erläutert. In den beigefügten Zeichnungen zeigt:

Figur 1 eine Teilseitenansicht einer Motorkettensäge teilweise im Schnitt und

Figur 2 einen Teilschnitt entlang der Linie II—II in Fig. 1 im Kupplungsbereich.

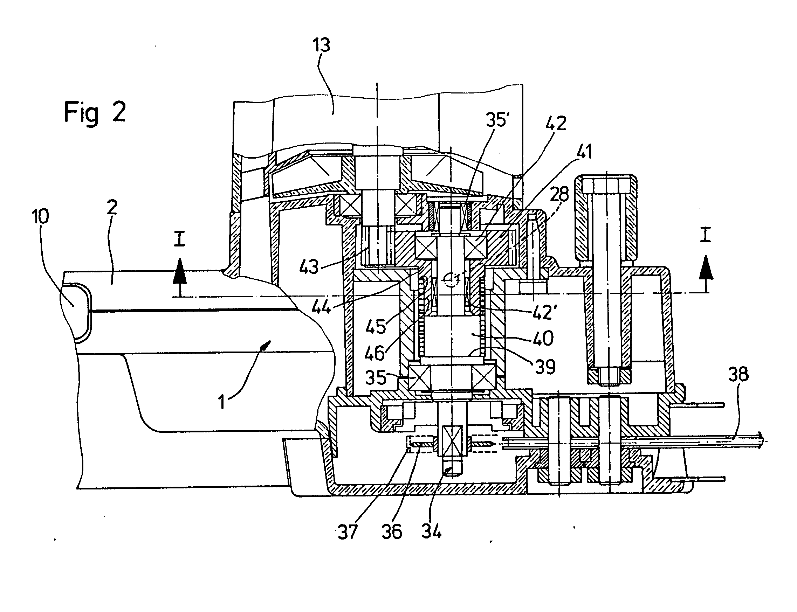

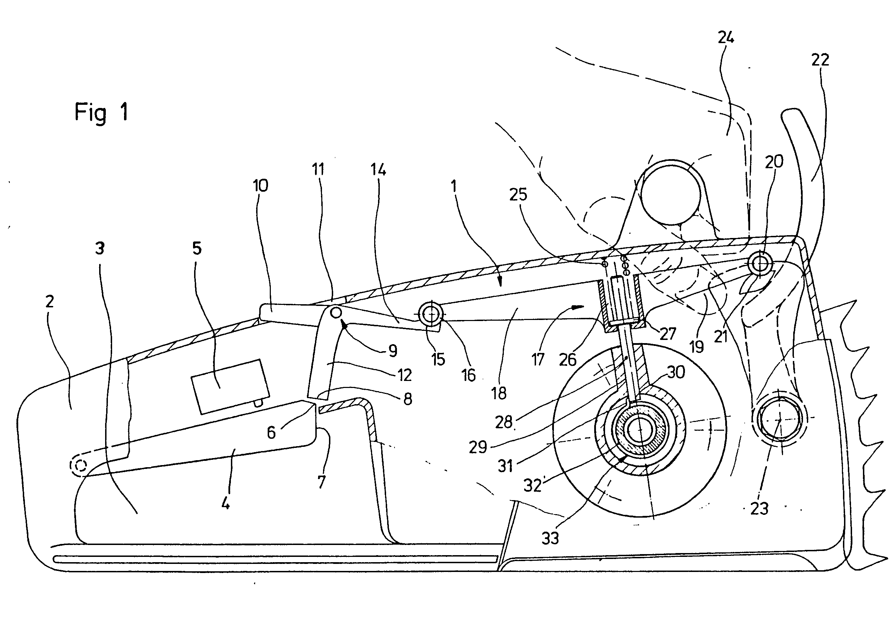

Am Gehäuse 1 eines in den Fig. 1 und 2 dargestellten Ausführungsbeispiels einer Motorkettensäge ist ein Handgriff 2 angeformt. Auf der Oberseite einer Grifföffnung 3 ist ein Schalterdrücker 4 schwenkbar gelagert über den ein Schalter 5 betätigbar ist. Eine Kante 6 einer Stirnfläche 7 des Schalterdrückers 4 kommt bei normaler Betätigung an einem Sperranschlag 8 zur Anlage, so daß der Schalterdrücker 4 blockiert ist. Zur Aufhebung dieser Blockierung ist auf der Oberseite des Handgriffs 2 ein dreiarmiger Hebel 9 gelagert, dessen erster Hebelarm 10 in einem Durchbruch 11 auf der Oberseite des Handgriffs 2 etwas herausragt und mit dem Daumen der den Handgriff 2 fassenden Hand niedergedrückt werden kann. Damit verschwenkt der den Sperranschlag 8 tragende dritte Hebelarm 12 und gibt den Schalterdrücker 4 zum Einschalten des Schalters 5 und damit des Elektromotors 13 frei.

Der dem ersten Hebelarm 10 etwa gegenüberliegende zweite Hebelarm 14 des dreiarmigen Hebels 9 weist an seinem Ende ein Lagerauge 15 auf, in dem eine Rolle 16 eines zweiarmigen Hebels 17 von unten her abgestützt ist. Die Rolle 16 ist dabei am Ende des einen Arms 18 zur Herabsetzung der Reibung drehbar gelagert.

Auch der andere Arm 19 des zweiarmigen Hebels trägt an seinem Ende ein weitere Rolle 20, die in einem Lagerauge 21 eines Schwenkbügels 22 ebenfalls von unten her abgestützt ist. Der Schwenkbügel 22 ist etwa in der Gehäusemitte in einem Schwenklager 23 um einen gewissen relativ kleinen Schwenkwinkel nach außen schwenkbar und zwar erfolgt eine solche Schwenkbewegung in einer Gefahrensituation beim Hochschlagen der Kettensäge durch die in Fig. 1 angedeutete Hand 24 der Bedienungsperson. Durch die Schwenkbewegung des Schwenkbügels 22 wird die Rolle 20 freigegeben, so daß der zweiarmige Hebel 17 durch die Wirkung einer Feder 25 etwas nach unten ausweichen kann.

Etwa in der Mitte des zweiarmigen Hebels ist eine Ausnehmung 26 für einen Federteller 27 eines Kupplungsbolzens 28 und die Feder 25 vorgesehen. Der Kupplungsbolzen 28 selbst ist in einer Führung 29 etwa senkrecht zum zweiarmigen Hebel 17 verschiebbar geführt. Sein unteres Ende wirkt als Stoppanschlag 30 auf das nach außen gewinkelte Ende 31 einer Schlingfeder 32 einer Schlingfederkupplung 33. Die Schlingfederkupplung 33 wird weiter unten näher erläutert.

Aus Fig. 2 ist ersichtlich, daß im Gehäuse 1 eine Abtriebswelle 34 über zwei Lager 35, 35' drehbar gelagert ist. Auf einem freien Ende der Abtriebswelle 34 ist fliegend ein Kettenrad 36 für eine Sägekette 37 gelagert, die um ein am Gehäuse 1 angeschraubtes Schwert 38 herumgeführt ist. Fest auf der Abtriebswelle 34 ist eine einen Absatz 39 aufweisende Abtriebstrommel 40. Weiter ist auf der Abtriebswelle 34 ein Zahnrad 41 über zwei Lager 42, 42' drehbar gelagert, das über ein Ritzel 43 vom Elektromotor 13 angetrieben werden kann. Das Zahnrad 41 weist auf einer Seite vorstehend eine Nabe 44 auf, die einen Absatz 45 aufweist, dessen Verlängerung eine Antriebstrommel 46 abgibt. Auf den Trommeln 40 und 46 ist zwischen den Absätzen 39 und 45 die Schlingfeder 32 der Schlingfederkupplung 33 axial lagegesichert mit Eigenvorspannung in Umfangsrichtung aufgenommen. Die Schlingfeder 32 ist eine rechtsgewundene Feder, so daß beim Antrieb der Antriebstrommel 46 beim Anstoßen des Endes 31 der Schlingfeder 32 am Stoppanschlag 30 die Windungen der vorgespannt auf den Trommeln 40, 46 anliegenden Schlingfeder 32 aufgedreht werden, so daß sich die Federwindungen zumindest von der Antriebstrommel 46 abheben und so die Schlingfederkupplung 33 geöffnet wird und sich die Antriebstrommel 46 frei dreht. Das Ende 31 der Schlingfeder 32 liegt weiter am Stoppanschlag 30 an, so daß die Drehung der Schlingfeder 32 verhindert wird. Durch die Eigenspannung wird die Abtriebstrommel 40 durch die auf der Abtriebstrommel 40 umfassenden Windungsteile der Schlingfeder 32 abgebremst, so daß insgesamt die Abtriebswelle 34 mit dem Kettenrad 36 und der Sägekette 37 in kurzer Zeit zum Stillstand kommt. Ein solches Abbremsen erfolgt immer, wenn entweder durch den Schwenkbügel 22 der Kupplungsbolzen 28 freigegeben wird oder durch den dreiarmigen Hebel 9 beim Loslassen des als Totmannschalter wirkenden Schalterdrückers 4. Zu bemerken ist noch, daß die Kraft der Feder 25 während des Betriebs durch Anliegen des dritten Hebelarmes 12 an der Stirnfläche 7 des Schalterdrückers 4 aufgenommen und nicht dauernd von der Bedienungsperson abgefangen werden muß.

Der Schwenkbügel 22 muß bei einer evtl. Notfallauslösung von Hand wieder in die Ausgangslage zurückgeschwenkt werden, wobei dann die Rolle 20 wieder im Lagerauge 21 dank der Wirkung der Feder 25 einrastet. Zur Inbetriebnahme der Kettensäge muß daher zuerst nur der erste Hebelarm 10 zur Aufhebung des Sperranschlags 8 niedergedrückt werden und es kann dann über den Schalterdrücker 4 der Elektromotor 13 eingeschalter werden, wobei mit dem Niederdrücken des ersten Hebelarms 10 des dreiarmigen Hebels 9 der Kupplungsbolzen 28 in seiner Führung 29 angehoben und das Ende 31 der Schlingfeder 32 freigegeben wird. Durch die Eigenspannung der Schlingfeder 32 ist die Schlingfederkupplung 33 wirksam und überträgt das Antriebsmoment von der Antriebstrommel 46 auf die Abtriebstrommel 40, so daß unmittelbar mit dem Einschalten des Elektromotors 13 die Sägekette 37 angetrieben ist. Das Lösen der Schlingfederkupplung 33 erfolgt über den Kupplungsbolzen 28 automatisch, wenn entweder der Schalterdrücker 4 losgelassen und damit der dritte Hebelarm 12 freigegeben wird oder eine Notauslösung über den Schwenkbügel 22 erfolgt.

**Patentansprüche**

1. Tragbare Motorkettensäge mit einer Reibungsbremse zum Abbremsen der Sägekette (37), die mit einem beim Auftreten eines bedrohlichen Zustandes ansprechenden Schalter versehen ist, durch dessen Betätigung eine Reibungsbremse wirksam wird, wobei zwischen dem Antriebsmotor (13) und der Sägekette (37) eine Schlingfederkupplung (33) vorgesehen ist, die zugleich auch als Reibungsbremse für die Sägekette (37) dient, und bei der die Schlingfeder (32) der Schlingfederkupplung (33) mit einem Teil ihrer Windungen eine vom Antriebsmotor (13) angetriebene Antriebstrommel (46) und mit dem restlichen Teil ihrer Windungen eine mit dem Kettenantrieb verbundene Abtriebstrommel (40) umschließt, wobei die Schlingfeder (32) mit ihrer eigenen Vorspannung an den Trommeln (40, 46) anliegt und die Windungen der Schlingfeder (32) im Drehsinn der Antriebstrommel (46) gleichsinnig gewunden sind und das antriebstrommelseitige Ende (31) der Schlingfeder (32) mit einem Stoppanschlag (30) zusammenwirkt, der in die Umlaufbahn des außen abgewinkelten Endes (31) dieser Schlingfeder einschiebbar ist, und wobei der Stoppanschlag (30) von einem Ende eines an dem Gehäuse der Motorkettensäge mittig gelagerten Kupplungsbolzens (28) gebildet ist und wobei an dem anderen Ende des Kupplungsbolzens (28) ein Federteller (27) angeordnet ist, an dem eine am Gehäuse abgestützte Feder (25) angreift und den Kupplungsbolzen (28) in Richtung auf seine Stopplage drängt, dadurch gekennzeichnet, daß der Federteller (27) fest mit dem Kupplungsbolzen (28) verbunden ist, und daß ein zweiarmiger Hebel (17) vorgesehen ist, der etwa in seiner Mitte eine Lagerausnehmung (26) besitzt, die den Federteller (27) aufnimmt, und daß der eine Arm (18) des zweiarmigen Hebels von einem daran angreifenden, handbetätigten Sperrhebel (10, 14) in dessen entriegelter Stellung in eine Richtung entgegengesetzt der Kraftrichtung der Feder (25) und im wesentlichen parallel zur axialen Richtung des Kupplungsbolzens (28) verschoben ist, und daß der andere Arm (19) des zweiarmigen Hebels (17) von einem daran angreifenden Bahnstück eines als Fühler dienenden Schwenkhebels (22) in dessen nichtausgelöster Stellung in eine Richtung entgegengesetzt der Kraftrichtung der Feder (25) und im wesentlichen achsparallel zum Kupplungsbolzen (28) verschoben ist.

2. Motorkettensäge nach Anspruch 1, dadurch gekennzeichnet, daß die Enden der Arme (18, 19) Rollen (16, 20) tragen.

3. Kettensäge nach Anspruch 1, dadurch gekennzeichnet, daß der zweiarmige Hebel (17) etwa in seiner Mitte eine napfförmige Ausnehmung (26) für die Feder (25) und einen Federteller (28) des Kupplungsbolzens (28) aufweist, wobei die Ausnehmung (26) mittig vom Kupplungsbolzen (28) durchdrungen ist.

4. Motorkettensäge nach Anspruch 1, dadurch gekennzeichnet, daß der Fühler um ein Schwenklager (23) schwenkbarer Schwenkbügel (22) ist, dessen freier Endbereich als Handschutz ausgebildet ist und bei einer Schleuderbewegung der Säge mit einer Hand (24) der Bedienungsperson in Berührung kommt, daß der Schwenkbügel (22) zwischen seinem Schwenklager (23) und dem Handschutz ein Rastauge (21) für das Ende des anderen Arms (19) des zweiarmigen Hebels (17) aufweist, wobei durch Wegschwenken des Schwenkbügels (22) beim Auftreten eines bedrohlichen Zustandes das Ende des Arms (19) freigegeben durch die Wirkung der Feder (25) abgesenkt und so der Kupplungsbolzen (28) in seine Stoppstellung gelangt.

5. Motorkettensäge nach Anspruch 1, dadurch gekennzeichnet, daß die Einschaltsperre durch den Stoppanschlag (30) in ihrer Sperrstellung gehalten ist, daß durch Betätigung einer Sperraufhebung der Stoppanschlag (30) gelöst und ein Schalterdrücker (4) zum Einschalten des Antriebsmotors (13) freigegeben wird.

6. Motorkettensäge nach Anspruch 5, dadurch gekennzeichnet, daß die Einschaltsperre ein dreiarmiger Hebel (9) ist, daß diese Hebelarme (10, 12, 14) etwa senkrecht zueinander angeordnet sind, daß ein erster Hebelarm (10) die von Hand betätigbare Sperraufhebung abgibt, das Ende des zweiten Hebelarms (14) mit dem Arm (18) des den Kupplungsbolzen (28) betätigenden Hebels (17) zusammenwirkt und daß das Ende des dritten Hebelarms (12) in der Einschaltsperrstellung als Sperranschlag für den Schalterdrücker (4) dient.

7. Motorkettensäge nach Anspruch 6, dadurch gekennzeichnet, daß der dreiarmige Hebel (9) an der Handgriffoberseite angeordnet ist und der erste Hebelarm (10) in einem Durchbruch (11) aus der Griffoberseite herausragt und die Stirnseite des dritten Hebelarms (12) den zweiten Hebelarm (14) angeordneten Hebelarm (12) den Sperranschlag für eine Kante (6) des Schalterdrückers (4) abgibt und der zweite Hebelarm (14) in einem Lagerauge (15) die Rolle (16) des den Kupplungsbolzen (28) tragenden Hebels (17) entgegen der Richtung ihrer Sperrbewegung abstützt.

**Revendications**

1. Tronçonneuse portative à chaîne coupante avec un frein à frottement pour le freinage de la chaîne coupante (37) qui est prévue avec un désaccoupleur réagissant lors de la survenance d'une situation dangereuse et par la manoeuvre duquel un frein à frottement est mis en action, dans laquelle est prévu entre le moteur d'entraînement (13) et la chaîne coupante un accouplement (33) à ressort enroulé qui sert aussi de frein à frottement pour la chaîne coupante (37), et dans laquelle le ressort enroulé (32) de l'accouplement à ressort enroulé (33) entoure, par une partie de ses spires, un tambour d'entraînement (46) entraîné par le moteur d'entraînement (13) et, par la partie restante de ses spires, un tambour de sortie (40) relié à l'entraînement de la chaîne, le ressort enroulé (32) s'appliquant contre les tambours (40, 46) sous l'effet de sa propre précontrainte, et les spires du ressort enroulé (32) étant enroulées dans le même sens de rotation que le tambour d'entraînement (46), et l'extrémité (31) du ressort enroulé (32) se trouvant du côté du tambour d'entraînement pour coopérer avec une butée d'arrêt (30) qui peut être placée sur la trajectoire de rotation de l'extrémité (31) coudée vers l'extérieur de ce ressort enroulé, la butée d'arrêt (30) étant constituée par une extrémité d'une broche d'accouplement (28) montée au milieu du carter de la tronconneuse à chaîne coupante, et à l'autre extrémité de la broche d'accouplement (28) étant prévue une cuvette de ressort (27) sur laquelle agit un ressort (25) qui prend appui sur le carter et repousse la broche d'accouplement (28) en direction de sa position d'arrêt, caractérisée en ce que la cuvette de ressort (27) est réunie fermement à la broche d'accouplement (28) et il est prévu un levier (17) à deux bras qui possède sensiblement en son milieu un évidement (26) servant de logement pour recevoir la cuvette de ressort (27), et l'un des bras (18) du levier à deux bras est déplaçable par un levier de blocage (10, 14) manoeuvrable à la main, agissant sur lui à sa position de déblocage dans un sens opposé au sens de la force du ressort (25) et sensiblement parallèlement à la direction axiale de la broche d'accouplement (28), tandis que l'autre bras (19) du levier (17) à deux bras, est déplaçable par la course partielle d'un levier pivotant (22) servant de palpeur agissant sur lui à sa position de non blocage, dans un sens opposé au sens de la force du ressort (25) et sensiblement parallèlement à l'axe de la broche d'accouplement (28).

2. Tronçonneuse à chaîne selon la revendication 1 caractérisée en ce que les extrémités des bras (18, 19) portent des galets (16, 20).

3. Tronçonneuse à chaîne selon la revendication 1 caractérisée en ce que le levier à deux bras (17) présente sensiblement en son milieu un évidement (26) en forme de coupelle pour le ressort (25) et pour une cuvette de ressort (27) de la broche d'accouplement (28), cet évidement (26) étant traversé en son centre par la broche d'accouplement (28).

4. Tronçonneuse à chaîne selon la revendication 1 caractérisée en ce que le palpeur est un étrier pivotant (22) pouvant pivoter autour d'un palier de pivotement (23) dont la partie terminale libre a la configuration d'un pare-main et qui vient en contact avec une main (24) de l'utilisateur, lors d'un mouvement de tressautement de la scie, et l'étrier pivotant (22) présente entre son palier de pivotement (23) et le pare-main un cran d'arrêt (21) pour l'extrémité de l'autre bras (19) du levier (17) à deux bras, et, par effacement pivotant de l'étrier pivotant (22) lors de la survenance d'une situation dangereuse, l'extrémité du bras (19) libérée est abaissée sous l'action du ressort (25) et ainsi la broche d'accouplement (28) arrive à sa position d'arrêt.

5. Tronçonneuse à chaîne selon la revendication 1 caractérisée en ce que le verrou d'interrupteur est tenu à sa position de verrouillage par la butée d'arrêt (30) et en ce que, par la manoeuvre d'un levier de déverrouillage, la butée d'arrêt (30) est effacée et un poussoir (4) d'interrupteur est libéré pour la mise en marche du moteur d'entraînement (13).

6. Tronçonneuse à chaîne selon la revendication 5 caractérisée en ce que le verrou d'interrupteur est un levier (9) à trois bras, ces bras de levier (10, 12, 14) sont disposés sensiblement perpendiculairement les uns aux autres, un premier bras de levier (10) permet la suppression du verrouillage réalisable à la main, l'extrémité du deuxième bras de levier (14) coopère avec le bras (18) du levier (17) actionnant la broche d'accouplement (28) et l'extrémité du troisième bras de levier (12) sert, en position de verrouillage de l'interrupteur, de butée de blocage pour le poussoir (4) d'interrupteur.

7. Tronçonneuse à chaîne selon la revendication 6 caractérisée en ce que le levier (9) à trois bras est disposé sur le côté supérieur de la poignée et le premier bras de levier (10) est en saillie du côté supérieur de la poignée par une ouverture (11) et la face frontale du troisième bras de levier (12) disposé perpendiculairement au deuxième bras de levier (14) constitue une butée d'arrêt pour un bord (6) du poussoir (4) d'interrupteur et le deuxième bras de levier (14) s'applique par une dépression (15) contre le galet (16) du levier (7) portant la broche d'accouplement (28), dans le sens opposé au sens de son mouvement de verrouillage.

**Claims**

1. A portable motorised chain saw with a friction brake for braking the saw chain (37), which is provided with a switch which responds when a dangerous condition occurs and the actuation of which causes a friction brake to become operative, wherein provided between the drive motor (13) and the saw chain (37) is a loop spring clutch (33) which at the same time also serves as the friction brake for the saw chain (37), and in which the loop spring (32) of the loop spring clutch (33) embraces with a part of its turns a drive drum (46) which is driven by the drive motor (13) while with the remaining part of its turns it embraces a driven drum (40) which is connected to the chain drive, wherein the loop spring (32) bears with its inherent prestressing against the drums (40, 46) and the turns of the loop spring (32) are wound in the same direction in the direction of rotation of the drive drum (46) and the end (31) of the loop spring (32) which is towards the drive drum co-operates with a stop abutment (30) which can be pushed into the path of circular movement of the externally bent-over end (31) of said loop spring, and wherein the stop abutment (30) is formed by one end of a coupling pin (28) which is centrally mounted on the housing of the motorised chain saw, and wherein arranged at the other end of the coupling pin (28) is a spring plate (27) against which a spring (25) supported against the housing engages and urges the coupling pin (28) towards its stop position, characterised in that the spring plate (27) is fixedly connected to the coupling pin (28) and that there is provided a two-armed lever (17) which approximately at its centre has a mounting recess (26) which accommodates the spring plate (27), and that the one arm (18) of the two-armed lever is displaced by a hand-actuated locking lever (10, 14) engaging against same, in the unlocked position thereof, in a direction in opposition to the direction of the force of the spring (25) and substantially parallel to the axial direction of the coupling pin (28), and that the other arm (19) of the two-armed lever (17) is displaced by a track portion engaging same of a pivotal lever (22) serving as a sensor, in the non-triggered position thereof, in a direction in opposition to the direction of the force of the spring (25) and in substantially axis-parallel relationship to the coupling pin (28).

2. A motorised chain saw according to claim 1 characterised in that the ends of the arms (18, 19) carry rollers (16, 20).

3. A chain saw according to claim 1 characterised in that the two-armed lever (17) is provided approximately at its centre with a cup-shaped recess (26) for the spring (25) and a spring plate (28) of the coupling pin (28), wherein the coupling pin (28) passes centrally through the recess (26).

4. A motorised chain saw according to claim 1 characterised in that the sensor is a pivotal yoke member (22) which is pivotable about a pivot mounting (23) and the free end region of which is in the form of a hand guard and comes into contact with a hand (24) of the operator in the event of a kick-back movement of the saw, that the pivotal yoke member (22) is provided between its pivot mounting (23) and the hand guard with a retaining eye (21) for the end of the other arm (19) of the two-armed lever (17), wherein by the pivotal yoke member (22) pivoting away when a dangerous condition occurs the end of the arm (19) is released and moved downwardly due to the action of the spring (25) and thus the coupling pin (28) moves into its stop position.

5. A motorised chain saw according to claim 1 characterised in that the switching-on lock is held in its locking position by the stop abutment (30), and that by actuation of a lock release the stop abutment (30) is released and a switch trigger (4) is released for switching on the drive motor (13).

6. A motorised chain saw according to claim 5 characterised in that the switching-on lock is a three-armed lever (9), that said lever arms (10, 12, 14) are arranged substantially perpendicularly to each other, that a first lever arm (10) provides the manually actuable lock release, the end of the second lever arm (14) co-operates with the arm (18) of the lever (17) for actuating the coupling pin (28), and that the end of the third lever arm (12), in the switching-on lock position, serves as a locking abutment for the switch trigger (4).

7. A motorised chain saw according to claim 6 characterised in that the three-armed lever (9) is disposed on the top of the handle and the first lever arm (10) sticks out of the top of the handle through an opening (11) and the end of the third lever arm (12) which is arranged substantially perpendicularly to the second lever arm (14) provides the lock abutment for an edge (6) of the switch trigger (4) and in a mounting eye (15) the second lever arm (14) supports the roller (16) of the lever (17) carrying the coupling pin (28), in the opposite direction to the direction of its locking movement.

Fig 2

Fig 1